# FASCICULE DE BREVET EUROPEEN

(11) **EP 1 896 327 B1**
(45) Date de publication et mention de la délivrance du brevet: **14.01.2009**
(21) Numéro de dépôt: 06777491.9
(22) Date de dépôt: 27.06.2006
(51) Int. Cl.: B64D 27/26

(54) **MAT D'ACCROCHAGE DE MOTEUR POUR AERONEF**
TRIEBWERKMONTAGESTRUKTUR FÜR EIN FLUGZEUG
ENGINE MOUNTING STRUCTURE FOR AN AIRCRAFT

(30) Priorité: 29.06.2005 FR 0551819
(43) Date de publication de la demande: 12.03.2008
(73) Titulaire: AIRBUS France, 31060 Toulouse (FR)
(72) Inventeur: COMBES, Stéphane, F-31660 Buzet sur Tarn (FR); LAFONT, Laurent, F-31320 Pechbusque (FR)
(74) Mandataire: Ilgart, Jean-Christophe
(86) Numéro de dépôt international: PCT/EP2006/063598
(87) Numéro de publication internationale: WO 2007/000456

(56) Documents cités:
- EP-A- 1 031 507
- FR-A- 2 770 486
- FR-A- 2 862 944

## Description

### DOMAINE TECHNIQUE

La présente invention se rapporte de façon générale à un mât d'accrochage de moteur pour aéronef, tel qu'un turboréacteur. Ce type de mât d'accrochage, également appelé « EMS » (de l'anglais « Engine Mounting Structure »), permet de suspendre le turboréacteur au-dessous de la voilure de l'aéronef, ou bien de monter ce turboréacteur au-dessus de cette même voilure, par l'intermédiaire d'une pluralité d'attaches moteur.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage interposé entre le turboréacteur et la structure rigide du mât, ce système comportant globalement au moins deux attaches moteur, généralement au moins une attache avant et au moins une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à une attache arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, un mât d'accrochage classique de l'art antérieur comme dans le document EP1031507, est équipé d'une attache arrière habituellement solidarisée au longeron inférieur du caisson. Cette spécificité implique qu'il est nécessaire d'avoir un accès à l'intérieur du caisson pour pouvoir assurer le montage de l'attache arrière. Cependant, l'accessibilité à l'intérieur du mât est souvent très limitée, ce qui engendre inéluctablement des difficultés de montage, pénalisantes en termes de coût et de temps.

### EXPOSÉ DE L'INVENTION

L'invention a donc pour but de proposer un mât d'accrochage de moteur pour aéronef remédiant au moins partiellement à l'inconvénient mentionné ci-dessus relatif aux réalisations de l'art antérieur, et également de présenter un aéronef disposant d'au moins un tel mât.

Pour ce faire, l'invention a pour objet un mât d'accrochage de moteur pour aéronef, ce mât du type caisson étant formé par l'assemblage d'un longeron supérieur, d'un longeron inférieur, de deux panneaux latéraux et de nervures transversales reliant les longerons et panneaux, le mât comprenant également une attache moteur arrière équipée d'un corps d'attache arrière. Selon l'invention, l'attache moteur arrière est pourvue de deux ferrures latérales comprenant chacune une portion longitudinale au contact d'une face intérieure du panneau latéral lui étant associé et montée fixement sur cette même face intérieure, ainsi qu'une portion transversale comportant une interface de fixation du corps d'attache arrière, cette portion transversale étant agencée de manière à traverser une échancrure pratiquée sur le panneau latéral associé.

Ainsi, l'invention proposée permet d'offrir un montage aisé de l'attache moteur arrière équipant le mât d'accrochage, étant donné que les interfaces de fixation du corps d'attache arrière sont donc situées à l'extérieur du caisson. Effectivement, dans cette solution où la portion longitudinale de la ferrure latérale obture préférentiellement son échancrure associée, il est entendu que la portion transversales fait quant à elle saillie du panneau latéral vers l'extérieur, en traversant l'échancrure prévue à cet effet. Ainsi, cette configuration particulière rend l'interface de fixation directement et facilement accessible pour un opérateur se situant à proximité du caisson, et désirant par exemple monter des boulons au niveau de cette même interface de fixation.

De préférence, le longeron inférieur présente un étranglement constitué par deux renfoncements servant respectivement à loger les deux ferrures latérales de l'attache moteur arrière. En d'autres termes, le longeron inférieur est donc cintré selon la direction transversale au niveau de l'attache moteur arrière dans le but de compenser l'épaisseur de la portion longitudinale des ferrures latérales de cette attache arrière. En effet, les renfoncements combinés à la présence des deux ferrures latérales permettent d'obtenir un caisson dont les deux surfaces latérales disposent d'une forme sensiblement droite continue, ce qui autorise par ailleurs l'optimisation des formes aérodynamiques de la nacelle au droit de ces ferrures.

En outre, il est précisé que cette spécificité génère des gains en terme de masse totale du mât d'accrochage, puisque l'étranglement prévu permet de réduire la largeur du corps d'attache arrière situé au dessous du longeron inférieur, ainsi que celle du caisson au niveau de l'attache moteur arrière.

De manière préférée, l'échancrure de chacun des deux panneaux latéraux est ouverte vers le bas. De plus, il est noté que le longeron inférieur comporte de façon préférentielle deux ailes latérales montées fixement respectivement sur les deux panneaux latéraux, ce qui permet à la portion longitudinale de chacune des deux ferrures latérales de l'attache arrière d'être interposée entre l'une des deux ailes latérales et l'un des deux panneaux latéraux. A ce titre, notons qu'il est même recherché un contact entre la portion longitudinale et les deux derniers éléments cités.

Toujours de façon préférentielle, la portion transversale de chacune des deux ferrures latérales de l'attache arrière comporte une plaque de fixation définissant l'interface de fixation du corps d'attache arrière, ainsi que des nervures de renfort solidaires de la plaque de fixation et de la portion longitudinale. Dans un tel cas, on peut préférentiellement prévoir que les nervures de renfort sont orientées selon des plans parallèles définis par une direction transversale et une direction verticale du mât.

De préférence, l'interface de fixation de chacune des deux ferrures latérales de l'attache arrière prend la forme d'une surface plane orientée selon un plan défini par la direction transversale et une direction longitudinale du mât.

De manière préférée, chacune des deux ferrures latérales de l'attache arrière est réalisée d'un seul tenant, et de préférence en titane.

Il est indiqué que l'attache arrière est préférentiellement conçue de manière à définir deux demi-attaches chacune capable d'assurer la reprise des efforts s'exerçant selon une direction verticale du mât.

Dans le cas où l'on désire que cette attache arrière assure également la reprise des efforts s'exerçant selon la direction transversale du mât, on peut prévoir que cette attache moteur arrière comporte en outre un premier pion de cisaillement capable d'assurer la reprise des efforts s'exerçant selon la direction transversale de ce mât, ce premier pion de cisaillement traversant le longeron inférieur et disposant d'une extrémité inférieure logée dans le corps d'attache arrière, cette extrémité inférieure étant pourvue d'un alésage traversé par une première goupille traversant également le corps d'attache arrière.

Cet agencement procure donc non seulement la possibilité pour l'attache arrière de reprendre les efforts s'exerçant selon la direction transversale du mât, mais permet également, de par la coopération entre l'alésage et la goupille traversant le corps d'attache arrière, de reprendre les efforts s'exerçant selon la direction verticale du mât en cas de défaillance/rupture de l'une des deux ferrures latérales. Cette solution astucieuse permet par conséquent d'assurer une fonction dite « Fail Safe » pour la transmission d'efforts selon la direction verticale, sans que cela n'engendre une complexification sensible de la conception du corps d'attache arrière. En particulier, cette dernière pièce peut toujours être réalisée d'une seul tenant, de préférence en titane, ce qui engendre avantageusement un gain en termes de masse et de coût.

D'autre part, dans un souci d'obtenir un système d'attaches moteur isostatique, on peut prévoir un jeu fonctionnel entre la goupille et l'alésage du pion de cisaillement, de manière à ce que les efforts selon la direction verticale transitent par ce pion uniquement en cas de défaillance / rupture de l'une des deux ferrures latérales.

De préférence, l'attache moteur arrière comporte en outre un second pion de cisaillement capable d'assurer, uniquement en cas de défaillance survenant au niveau du premier pion de cisaillement, la reprise des efforts s'exerçant selon la direction transversale du mât, ce second pion de cisaillement traversant le longeron inférieur et disposant d'une extrémité inférieure logée dans le corps d'attache arrière, cette extrémité inférieure étant pourvue d'un alésage traversé par une seconde goupille traversant également le corps d'attache arrière. Par conséquent, il doit être compris que ce second pion de cisaillement permet d'assurer la fonction « Fail Safe » pour la transmission des efforts s'exerçant selon la direction transversale, ce qui implique que le pion est de préférence monté avec jeu dans un logement du corps d'attache arrière. Par ailleurs, la seconde goupille coopérant avec l'alésage permet quant à elle de procurer une seconde fonction « Fail Safe » pour la transmission des efforts s'exerçant selon la direction verticale, ce qui engendre avantageusement la présence d'une sécurité distincte pour chacune des deux ferrures latérales de l'attache arrière. A ce titre, on prévoit effectivement préférentiellement de placer les deux pions de cisaillement respectivement à proximité des deux ferrures latérales.

Pour améliorer encore davantage les deux fonctions sécuritaires dites « Fail Safe » respectivement associées aux deux ferrures latérales, on peut prévoir que l'attache moteur arrière comporte en outre un premier pion annexe traversant le longeron inférieur et disposant d'une extrémité inférieure logée dans le corps d'attache arrière, cette extrémité inférieure étant pourvue d'un alésage traversé par la première goupille, et que cette attache comporte également un second pion annexe traversant le longeron inférieur et disposant d'une extrémité inférieure logée dans le corps d'attache arrière, cette extrémité inférieure étant pourvue d'un alésage traversé par la seconde goupille.

De préférence, les première et seconde goupilles sont orientées selon la direction longitudinale du mât. De plus, les premier et second pions de cisaillement ainsi que les premier et second pions annexes disposent chacun d'une extrémité supérieure traversant une même nervure transversale du mât.

L'invention a également pour objet un aéronef comprenant au moins un mât d'accrochage tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef, comprenant un mât d'accrochage selon un mode de réalisation préféré de la présente invention ;
- la figure la représente une vue schématisant la reprise des efforts effectuée par chacune des attaches moteur de l'ensemble montré sur la figure 1,
- la figure 2 représente une vue en perspective d'une partie de l'attache moteur arrière du mât montré sur la figure 1 ;
- la figure 3 représente une vue de dessous de celle montrée sur la figure 2 ;
- la figure 4 représente une vue similaire à celle montrée sur la figure 2, les éléments manquants de l'attache moteur arrière ayant été rajoutés ; et
- la figure 5 représente une vue en coupe prise le long de la ligne V-V de la figure 3.

### EXPOSÉ DÉTAILLÉ DE MODES DE RÉALISATION PARTICULIERS

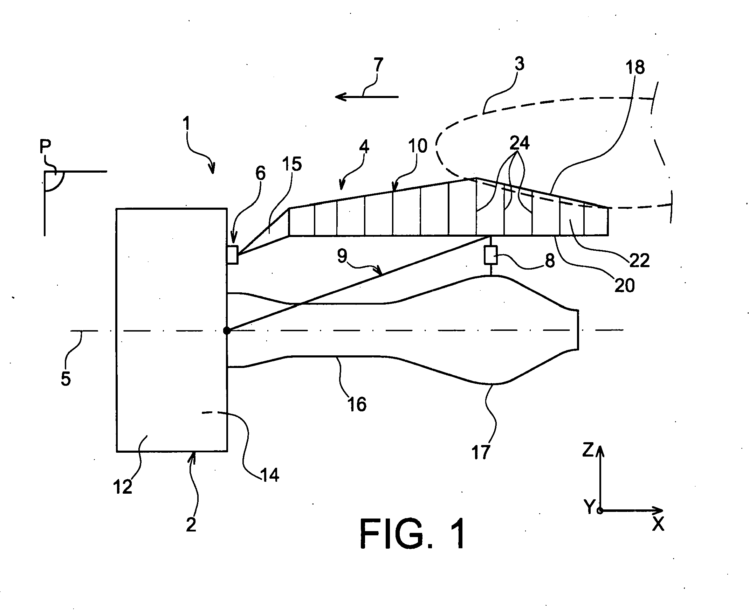

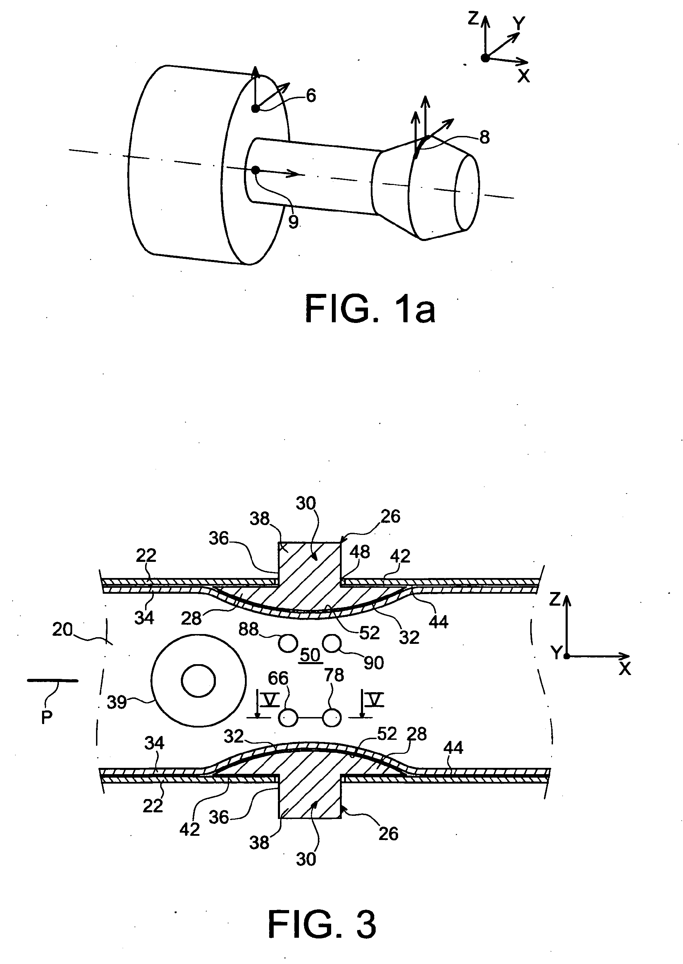

En référence à la figure 1, on voit un ensemble moteur 1 pour aéronef destiné à être fixé sous une aile 3 de cet aéronef (non représenté), cet ensemble 1 comportant un mât d'accrochage 4 selon un mode de réalisation préféré de la présente invention.

Globalement, l'ensemble moteur 1 est composé d'un moteur tel qu'un turboréacteur,2 et du mât d'accrochage 4, ce dernier étant muni notamment d'une pluralité d'attaches moteur 6, 8, 9 et d'une structure rigide 10 portant ces mêmes attaches. A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seules les attaches moteur 6, 8, 9 et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

La structure rigide 10 se présente quant à elle sous la forme classique d'un caisson formé par un longeron supérieur 18 et un longeron inférieur 20 s'étendant tous les deux selon la direction X et sensiblement dans un plan XY ou légèrement incliné par rapport à ce dernier, ainsi que par deux panneaux latéraux 22 (un seul étant visible sur la figure 1) s'étendant tous les deux selon la direction X et sensiblement dans un plan XZ. A l'intérieur de ce caisson, des nervures transversales 24 agencées selon des plans YZ et espacées longitudinalement viennent renforcer la rigidité de la structure rigide 10. Il est noté à titre indicatif que les éléments 18, 20, 22 peuvent chacun être réalisés d'un seul tenant, ou bien par l'assemblage de sections jointives.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6, une attache moteur arrière 8 formant en réalité deux demi-attaches arrière, ainsi qu'une attache 9 formant un dispositif de reprise des efforts de poussée générés par le turbomoteur 2. Comme cela est montré schématiquement sur le figure 1, ce dispositif 9 prend par exemple la forme de deux bielles latérales (une seule étant visible en raison de la vue de côté) raccordées d'une part à une partie arrière du carter de soufflante 12, et d'autre part à un palonnier monté sur l'attache arrière 8. En outre, il est indiqué que les extrémités arrière de ces bielles pourraient alternativement être raccordées à un palonnier positionné en avant par rapport à l'attache arrière.

L'attache moteur avant 6, solidarisée à la pyramide 15 de la structure rigide 10 et au carter de soufflante 12, est conçue classiquement de manière à pouvoir reprendre uniquement des efforts générés par le turboréacteur 2 selon les directions Y et Z, et donc pas ceux s'exerçant selon la direction X. A titre indicatif, cette attache avant 6 pénètre de préférence dans une portion interne du carter de soufflante qui porte des pales fixes de ce dernier, et étant située à proximité d'une extrémité avant du carter central.

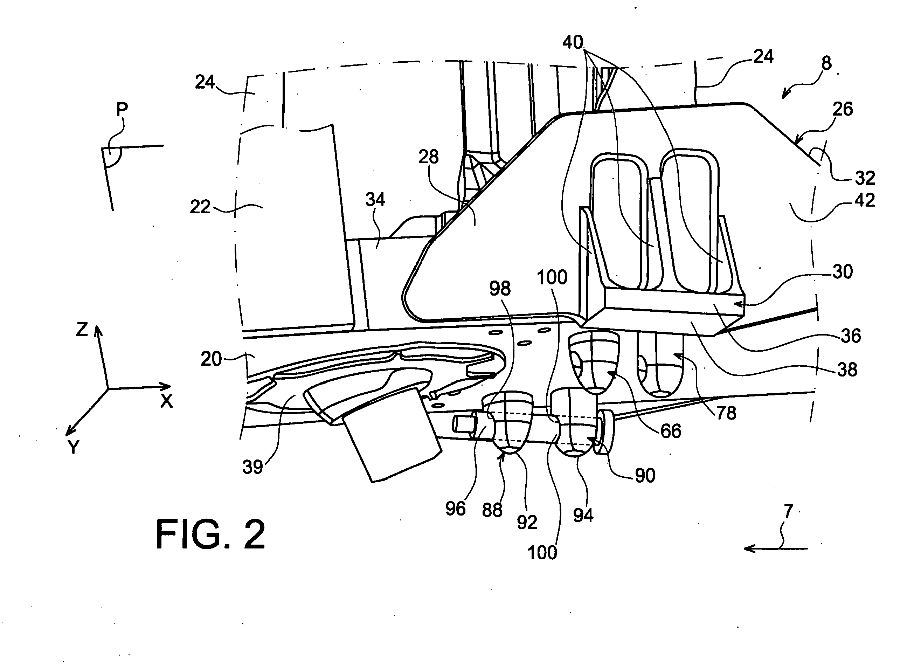

L'attache moteur arrière 8 constitue une particularité de l'invention et sera plus amplement détaillée en référence aux figures 2 à 5. Elle est globalement interposée entre le carter d'éjection 17 et la structure rigide 10 du mât. Elle est quant à elle conçue pour former deux demi-attaches disposées de façon symétrique par rapport à un plan P défini par l'axe 5 et la direction Z, chacune de ces demi-attaches étant conçue de manière à pouvoir reprendre des efforts générés par le turboréacteur 2 selon la direction Z, mais pas ceux s'exerçant selon les directions X et Y. Cependant, on peut prévoir que cette attache arrière est aussi en mesure de reprendre, avec une portion centrale; des efforts générés par le turboréacteur 2 selon la direction Y.

De cette manière, comme on peut le voir schématiquement sur la figure la, la reprise des efforts s'exerçant selon la direction X s'effectue à l'aide de l'attache 9, la reprise des efforts s'exerçant selon la direction Y s'effectue à l'aide l'attache avant 6 et de la portion centrale de l'attache arrière, et la reprise des efforts s'exerçant selon la direction Z s'effectue conjointement à l'aide de l'attache avant 6 et des deux demi-attaches arrière.

D'autre part, la reprise du moment s'exerçant selon la direction X s'effectue verticalement à l'aide des deux demi-attaches de l'attache 8, la reprise du moment s'exerçant selon la direction Y s'effectue verticalement à l'aide des deux demi-attaches de l'attache 8 conjointement avec l'attache 6, et la reprise du moment s'exerçant selon la direction Z s'effectue transversalement à l'aide de la portion centrale de l'attache 8, conjointement avec l'attache 6.

En référence à présent à la figure 2, on peut voir l'attache moteur arrière 8 dont certains éléments ont été volontairement omis pour des raisons évidentes de clarté. Il va tout d'abord être décrit la partie de l'attache 8 formant les deux demi-attaches arrière assurant chacune uniquement la reprise des efforts s'exerçant selon la direction Z, et étant agencées symétriquement par rapport au plan P précité.

Les deux demi-attaches arrière étant donc identiques, seule celle de droite sera détaillée ci-après. Globalement, celle-ci comprend une ferrure latérale 26 composée d'une portion longitudinale 28 et d'une portion transversale 30, et présente de préférence un plan de symétrie orienté selon les directions Y et Z. La portion longitudinale 28 s'étend donc selon la direction X sensiblement dans un plan XZ, et comprend une face intérieure 32 au contact d'une aile latérale 34 du longeron inférieur 20. A titre indicatif, il est connu de l'homme du métier que cette aile 34 est également sensiblement orientée selon un plan XZ de manière à permettre l'assemblage du panneau latéral 22 sur ce longeron 20, par exemple par rivetage ou éclissage.

La portion transversale 30 comporte une plaque de fixation 36 définissant une interface de fixation 38 d'un corps d'attache arrière (non représenté sur cette figure 2), cette interface 38 prend la forme d'une surface plane orientée selon un plan XY. D'autre part, elle comporte des nervures de renfort 40 solidaires de la face supérieure de la plaque de fixation 36 et de la face extérieure 42 de la portion longitudinale 28, ces nervures 40 étant orientées selon des plans parallèles YZ. D'une manière préférée, on peut prévoir que l'interface 38 se situe approximativement dans la continuité latérale d'une surface inférieure du longeron 20, comme cela est visible sur la figure 2.

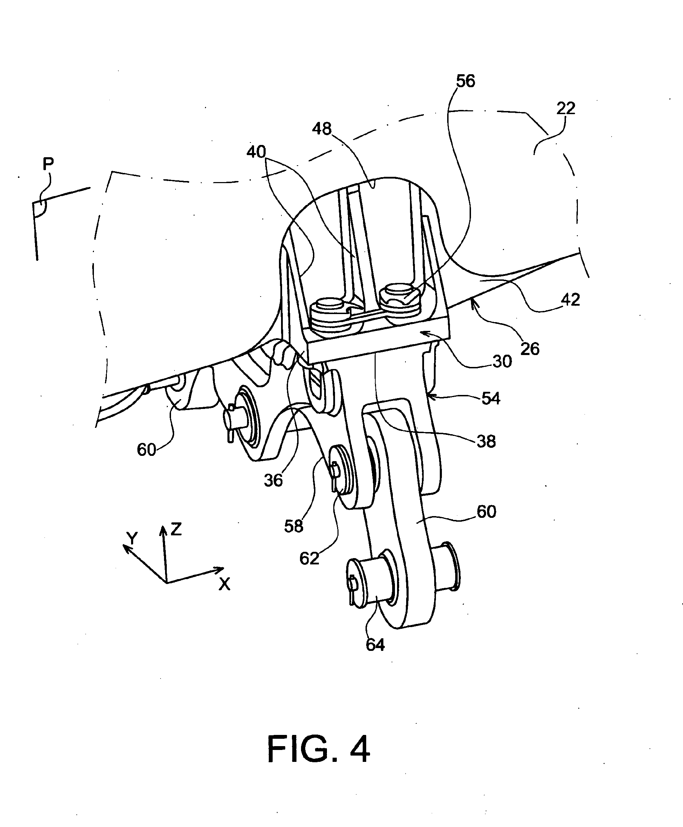

En référence à présent plus spécifiquement aux figures 3 et 4, on peut voir que l'une des particularités de l'invention réside dans le fait que la face extérieure 42 de la portion longitudinale 28 est au contact d'une face intérieure 44 du panneau latéral 22 lui étant associé. Par conséquent, la portion longitudinale 28 est pincée entre le panneau latéral 22 et l'aile 34 du longeron inférieur 20, ces trois éléments directement superposés étant assemblés les uns aux autres, de préférence par éclissage.

Pour permettre à la portion transversale 30 de faire saillie latéralement vers l'extérieur par rapport au panneau 22, ce dernier est pourvu d'une échancrure 48 ouverte vers le bas et traversée par la portion transversale. Dans cette configuration, au moins une partie de la plaque de fixation 36 se situe donc au-delà du panneau 22 dans la direction Y, comme cela est clairement visible sur la figure 3. La figure 4 montre quant à elle que le découpage de l'échancrure 48 est notamment réalisé de manière à laisser passer les nervures 40, qui traversent donc elles aussi cette échancrure 48 pour faire saillie latéralement vers l'extérieur par rapport au panneau 22.

A nouveau en référence à la figure 3, on peut apercevoir que le longeron inférieur 20 présente un étranglement 50 selon la direction Y, cet étranglement 50 étant formé par deux renfoncements 52 servant respectivement à loger les deux ferrures latérales 26 des deux demi-attaches arrière. C'est donc la face intérieure 32 de la portion longitudinale 28 qui est au contact du renfoncement 52 défini par l'aile 34 du longeron inférieur, cette portion d'aile disposant par conséquent d'une légère courbure vers l'intérieur du caisson.

La géométrie du renfoncement 52 est déterminée de manière à ce que la portion longitudinale 28 logée en son sein présente une face extérieure 42 se trouvant sensiblement dans la continuité de la face extérieure de la partie droite de l'aile du longeron 20, dans le but de former, avec ces deux faces extérieures, une surface plane d'appui orientée sensiblement selon un plan XZ pour le panneau 22.

En référence à présent plus spécifiquement à la figure 4, chaque ferrure latérale 26, qui est de préférence réalisée d'une seul tenant et en titane, est donc fixée au corps d'attache arrière 54 disposé transversalement au dessous du longeron inférieur 20. Ce corps 54, présentant également le plan P comme plan de symétrie, est donc au contact de l'interface de fixation 38, et fixé à cette dernière par l'intermédiaire de boulons verticaux 56 traversant la plaque de fixation 36 ainsi qu'une partie supérieure de ce corps 54.

Le corps 54 comporte alors une chape 58 faisant partie intégrante de la demi-attache arrière droite, sur laquelle est articulée une manille 60 par l'intermédiaire d'un axe 62 orienté selon la direction X. Comme on peut le voir sur la figure 4, la manille ou bielle 60 est inclinée par rapport à la verticale, de façon à ce rapprocher du plan P en allant vers le haut.

A titre indicatif, un second axe 64 également orienté selon la direction X est également prévu au niveau d'une extrémité inférieure de la manille 60, de manière à articuler cette dernière sur une ferrure/chape (non représentée) solidarisée au carter du turboréacteur 2. Par conséquent, on peut donc comprendre que chaque demi-attache arrière comprend la manille articulée 60, la chape 58 et la ferrure 26, les deux chapes 58 des deux demi-attaches étant par ailleurs réunies au sein du même corps d'attache arrière 54, de préférence réalisé d'un seul tenant.

Il ressort de la description qui précède que l'attache arrière 8 forme deux demi-attaches chacune capable d'assurer la reprise des efforts s'exerçant selon la direction Z. Or dans un mode de réalisation préféré de la présente invention, on prévoit que l'attache arrière 8 est également capable d'assurer la reprise des efforts s'exerçant selon la direction Y.

Pour ce faire, en référence conjointement aux figures 2, 3 et 5, on prévoit que l'attache moteur arrière 8 comporte également un premier pion de cisaillement 66 orienté selon la direction Z, ce pion 66 étant prévu pour assurer la reprise des efforts s'exerçant selon une direction Y, et plus particulièrement pour autoriser le passage de ces efforts entre le corps d'attache arrière 54 et la structure rigide 10 du mât d'accrochage.

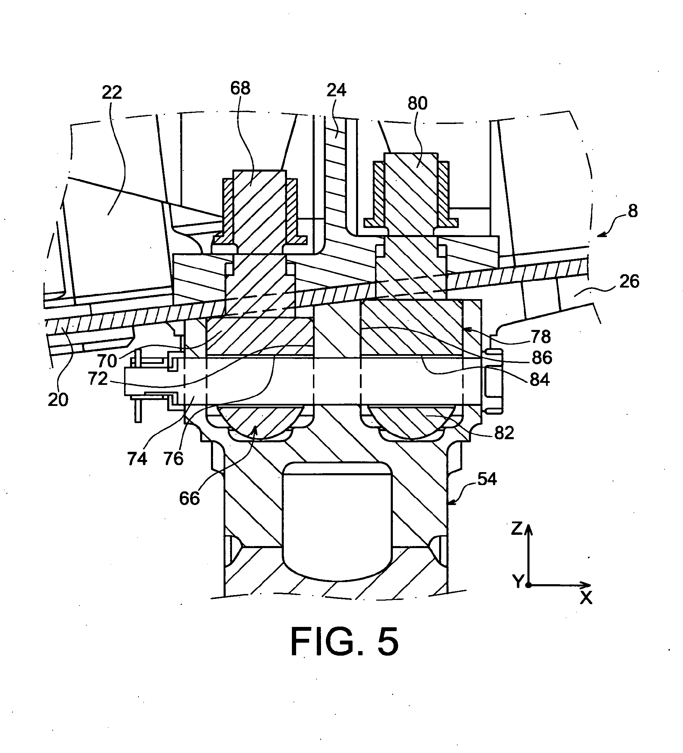

Le pion 66 comporte une extrémité supérieure 68 (uniquement visible sur la figure 5) située au niveau de l'une des nervures transversales 24 en forme de cadre, cette extrémité 68 occupant d'ailleurs un positionnement en saillie à l'intérieur de ce cadre la rendant facilement accessible. Le pion 66 se prolonge alors vers le bas en traversant successivement la partie inférieure de la nervure 24 concernée et le longeron inférieur 20. Il comporte ensuite une extrémité inférieure 70 faisant saillie vers le bas par rapport au longeron 20 du caisson, et étant logée dans un orifice 72 du corps d'attache arrière 54. C'est donc le contact entre la surface de cette extrémité 70 et celle de l'orifice 72 qui permet d'assurer la reprise des efforts selon la direction Y. A titre indicatif, il est noté que l'orifice 72 dispose d'une forme globalement ovale sensiblement complémentaire de celle du pion de cisaillement 66, et prend la forme d'un trou borgne pratiqué dans la partie supérieure du corps d'attache 54.

Si cette réalisation qui vient d'être décrite est sensiblement similaire à celles déjà rencontrées dans l'art antérieur dans le cadre de la reprise des efforts traversants, l'une des spécificités de l'invention réside dans le fait qu'il est prévu une première goupille 74 traversant successivement une partie avant du corps 54, un alésage 76 pratiqué dans l'extrémité inférieure 70 du pion 66, ainsi qu'une partie centrale du même corps 54.

Avec cet agencement particulier dans lequel la goupille 74 prenant la forme d'un axe est de préférence orientée selon la direction X, la coopération entre l'alésage 76 et la goupille 74 permet par conséquent de reprendre les efforts s'exerçant selon la direction Z en cas de défaillance / rupture de l'une des deux ferrures latérales 26, et en particulier celle appartenant à la demi-attache arrière de droite, en raison de la proximité entre le premier pion 66 et cette demi-attache de droite. Cela permet avantageusement d'assurer une fonction de sécurité dite « Fail Safe » pour la transmission d'efforts selon la direction Z, sans pour autant complexifier sensiblement la conception du corps 54. Par ailleurs, il est noté que pour que ce chemin d'efforts soit uniquement opérant lors d'une défaillance/rupture de la demi-attache arrière de droite, on prévoit alors un jeu fonctionnel entre la goupille 74 et l'alésage 76.

Pour renforcer cette fonction « Fail Safe » liée à la demi-attache arrière droite, l'attache moteur arrière 8 comporte en outre un premier pion annexe 78 aligné avec le pion de cisaillement 66 dans la direction de la goupille X, donc préférentiellement dans la direction X. Bien entendu, la direction de la goupille 74 pourrait être différente, tout en restant préférentiellement dans un plan XY, sans sortir du cadre de l'invention.

Ce pion 78 présente une conception similaire à celle du pion 66 décrit ci-dessus. Ainsi, il comporte une extrémité supérieure 80 (uniquement visible sur la figure 5) également située au niveau de la nervure transversale 24 précitée, cette extrémité 80 occupant un positionnement en saillie à l'intérieur du cadre formé par cette nervure, ce qui la rend facilement accessible. Le pion 78 se prolonge alors vers le bas en traversant successivement la partie inférieure de la nervure 24 concernée et le longeron inférieur 20. Il comporte ensuite une extrémité inférieure 82 faisant saillie vers le bas par rapport au longeron 20 du caisson, et étant logée dans un orifice 86 du corps d'attache arrière 54. De préférence, toujours de manière à rendre le système d'attaches moteur isostatique et d'empêcher au premier pion annexe 78 de reprendre des efforts s'exerçant selon la direction Y, on prévoit un jeu entre la surface de l'extrémité 82 et celle de l'orifice 86. Ici encore, il est noté que l'orifice 86 dispose d'une forme globalement ovale sensiblement complémentaire de celle du pion annexe 78, et prend la forme d'un trou borgne pratiqué dans la partie supérieure du corps d'attache 54.

Comme cela est visible sur la figure 5, l'attache arrière 8 est conçue de sorte que la goupille 74 sortant de la partie centrale du corps 54 traverse ensuite successivement un alésage 84 pratiqué dans l'extrémité inférieure 82 du pion 78, ainsi qu'une partie arrière du même corps 54, jusqu'à déboucher en dehors de celui-ci. Ici aussi, il est noté que pour que le chemin d'efforts constitué par les éléments 74 et 82 soit uniquement opérant lors d'une défaillance/rupture de la demi-attache arrière de droite, on prévoit un jeu fonctionnel entre la goupille 74 et l'alésage 84.

L'attache arrière 8 comporte un montage similaire à celui qui vient d'être décrit, mais qui est associé à la demi-attache arrière de gauche, notamment dans le but d'assurer la fonction de sécurité « Fail Safe » pour la transmission d'efforts selon la direction Z normalement assurée par cette demi-attache arrière de gauche. En effet, il est également prévu un second pion de cisaillement 88 et un second pion annexe 90 respectivement identiques aux pions 66 et 78, ces seconds pions 88, 90 étant pourvus d'extrémités inférieures 92, 94 logées dans le corps 54 et traversées par une seconde goupille 96 au niveau d'alésages 98 et 100. Ainsi, il doit être compris que l'ensemble pions/goupille associé à la demi-attache arrière de gauche est le symétrique par rapport au plan P de l'ensemble pions/goupille associé à la demi-attache arrière de droite, la seule différence entre ces deux ensembles étant le jeu recherché entre le second pion de cisaillement 88 et son orifice associé (non représenté) pratiqué dans le corps d'attache arrière. Ce jeu est encore une fois ici prévu de sorte que le second pion 88 permette uniquement d'assurer la fonction « Fail Safe » pour la transmission des efforts s'exerçant selon la direction Y, en cas de défaillance survenant au niveau du premier pion de cisaillement 66.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

## Revendications

1. Mât d'accrochage (4) de moteur (2) pour aéronef, ledit mât du type caisson étant formé par l'assemblage d'un longeron supérieur (18), d'un longeron inférieur (20), de deux panneaux latéraux (22) et de nervures transversales (24) reliant lesdits longerons et panneaux (18, 20, 22), ledit mât comprenant également une attache moteur arrière (8) équipée d'un corps d'attache arrière (54), **caractérisé en ce que** ladite attache moteur arrière (8) est pourvue de deux ferrures latérales (26) comprenant chacune une portion longitudinale (28) au contact d'une face intérieure (44) du panneau latéral (22) lui étant associé et montée fixement sur cette même face intérieure (44), ainsi qu'une portion transversale (30) comportant une interface de fixation (38) du corps d'attache arrière (54), ladite portion transversale (30) étant agencée de manière à traverser une échancrure (48) pratiquée sur ledit panneau latéral associé (22).

2. Mât d'accrochage (4) selon la revendication 1, **caractérisé en ce que** ledit longeron inférieur (20) présente un étranglement (50) constitué par deux renfoncements (52) servant respectivement à loger lesdites deux ferrures latérales (26) de l'attache moteur arrière (8).

3. Mât d'accrochage (4) selon la revendication 1 ou la revendication 2, **caractérisé en ce que** l'échancrure (48) de chacun desdits deux panneaux latéraux (22) est ouverte vers le bas.

4. Mât d'accrochage (4) selon l'une quelconque des revendications précédentes, **caractérisé en ce que** ledit longeron inférieur (20) comporte deux ailes latérales (34) montées fixement respectivement sur les deux panneaux latéraux (22), et **en ce que** ladite portion longitudinale (28) de chacune desdites deux ferrures latérales (26) de l'attache arrière est interposée entre l'une desdites deux ailes latérales (34) et l'un desdits deux panneaux latéraux (22).

5. Mât d'accrochage (4) selon l'une quelconque des revendications précédentes, **caractérisé en ce que** la portion transversale (30) de chacune desdites deux ferrures latérales (26) de l'attache arrière comporte une plaque de fixation (36) définissant ladite interface de fixation (38) du corps d'attache arrière (54), ainsi que des nervures de renfort (40) solidaires de ladite plaque de fixation (36) et de ladite portion longitudinale (28).

6. Mât d'accrochage (4) selon la revendication 5, **caractérisé en ce que** lesdites nervures de renfort (40) sont orientées selon des plans parallèles définis par une direction transversale (Y) et une direction verticale (Z) du mât.

7. Mât d'accrochage (4) selon l'une quelconque des revendications précédentes, **caractérisé en ce que** l'interface de fixation (38) de chacune desdites deux ferrures latérales (26) de l'attache arrière prend la forme d'une surface plane orientée selon un plan défini par une direction transversale (Y) et une direction longitudinale (X) du mât.

8. Mât d'accrochage (4) selon l'une quelconque des revendications précédentes, **caractérisé en ce que** chacune desdites deux ferrures latérales (26) de l'attache arrière est réalisée d'un seul tenant.

9. Mât d'accrochage (4) selon l'une quelconque des revendications précédentes, **caractérisé en ce que** chacune desdites deux ferrures latérales (26) de l'attache arrière est réalisée en titane.

10. Mât d'accrochage (4) selon l'une quelconque des revendications précédentes, **caractérisé en ce que** ladite attache arrière (8) est conçue de manière à définir deux demi-attaches chacune capable d'assurer la reprise des efforts s'exerçant selon une direction verticale (Z) dudit mât.

11. Mât d'accrochage (4) selon l'une quelconque des revendications précédentes, **caractérisé en ce que** ladite attache moteur arrière (8) comporte également un premier pion de cisaillement (66) capable d'assurer la reprise des efforts s'exerçant selon une direction transversale (Y) dudit mât, ledit premier pion de cisaillement (66) traversant ledit longeron inférieur (20) et disposant d'une extrémité inférieure (70) logée dans ledit corps d'attache arrière (54), cette extrémité inférieure (70) étant pourvue d'un alésage (76) traversé par une première goupille (74) traversant également ledit corps d'attache arrière (54).

12. Mât d'accrochage (4) selon la revendication 11, **caractérisé en ce que** ladite attache moteur arrière (8) comporte en outre un second pion de cisaillement (88) capable d'assurer, uniquement en cas de défaillance survenant au niveau dudit premier pion de cisaillement (66), la reprise des efforts s'exerçant selon la direction transversale (Y) dudit mât, ledit second pion de cisaillement (88) traversant ledit longeron inférieur (20) et disposant d'une extrémité inférieure (92) logée dans ledit corps d'attache arrière (54), cette extrémité inférieure (92) étant pourvue d'un alésage (98) traversé par une seconde goupille (96) traversant également ledit corps d'attache arrière (54).

13. Mât d'accrochage (4) selon la revendication 12, **caractérisé en ce que** ladite attache moteur arrière (8) comporte en outre un premier pion annexe (78) traversant ledit longeron inférieur (20) et disposant d'une extrémité inférieure (82) logée dans ledit corps d'attache arrière (54), cette extrémité inférieure (82) étant pourvue d'un alésage (84) traversé par ladite première goupille.

14. Mât d'accrochage (4) selon la revendication 13, **caractérisé en ce que** ladite attache moteur arrière (8) comporte en outre un second pion annexe (90) traversant ledit longeron inférieur (20) et disposant d'une extrémité inférieure (94) logée dans ledit corps d'attache arrière (54), cette extrémité inférieure (94) étant pourvue d'un alésage (100) traversé par ladite seconde goupille (96).

15. Mât d'accrochage (4) selon la revendication 14, **caractérisé en ce que** lesdites première et seconde goupilles (74, 96) sont orientées selon une direction longitudinale (X) dudit mât.

16. Mât d'accrochage (4) selon la revendication 15, **caractérisé en ce que** lesdits premier et second pions de cisaillement (66, 88) ainsi que lesdits premier et second pions annexes (78, 90) disposent chacun d'une extrémité supérieure (68, 80) traversant une même nervure transversale (24) dudit mât.

17. Aéronef **caractérisé en ce qu'**il comprend au moins un mât d'accrochage (4) selon l'une quelconque des revendications précédentes.

## Claims

1. Engine (2) attachment pylon (4) for an aircraft, said pylon of box type being formed by the assembly of an upper spar (18), a lower spar (20), two lateral panels (22) and transverse ribs (24) connecting said spars and panels (18, 20, 22), said pylon also comprising an aft engine attachment (8) fitted with an aft attachment body (54), **characterised in that** said aft engine attachment (8) is provided with two lateral brackets (26) each comprising a longitudinal portion (28) in contact with an inner face (44) of the lateral panel (22) associated with it and mounted fixed on this same inner face (44), and a transverse portion (30) comprising an attachment interface (38) for the aft attachment body (54), said transverse portion (30) being arranged so as to pass through a recess (48) formed on said associated lateral panel (22).

2. Attachment pylon (4) according to claim 1, **characterised in that** said lower spar (20) is provided with a narrowing (50) composed of two indents (52) in which said two lateral brackets (26) of the aft engine attachment (8) are housed.

3. Attachment pylon (4) according to claim 1 or claim 2, **characterised in that** the recess (48) of each of said lateral panels (22) opens downwards.

4. Attachment pylon (4) according to any one of the previous claims, **characterised in that** said lower spar (20) comprises two lateral flanges (34) installed fixed on the two lateral panels (22), and **in that** said longitudinal portion (28) of each of said two lateral brackets (26) of the aft attachment is inserted between one of said two lateral flanges (34) and one of said two lateral panels (22).

5. Attachment pylon (4) according to any one of the previous claims, **characterised in that** the transverse portion (30) of each of said two lateral brackets (26) of the aft attachment comprises an attachment plate (36) defining said attachment interface (38) of the aft attachment body (54), and reinforcing ribs (40) fixed to said attachment plate (36) and said longitudinal portion (28).

6. Attachment pylon (4) according to claim 5, **characterised in that** said reinforcing ribs (40) are oriented along parallel planes defined by a transverse direction (Y) and a vertical direction (Z) of the pylon.

7. Attachment pylon (4) according to any one of the previous claims, **characterised in that** the attachment interface (38) of each of said two lateral brackets (26) of the aft attachment is in the form of a plane surface oriented in the direction of a plane defined by a transverse direction (Y) and a longitudinal direction (X) of the pylon.

8. Attachment pylon (4) according to any one of the previous claims, **characterised in that** each of said two lateral brackets (26) of the aft attachment is made in a single piece.

9. Attachment pylon (4) according to any one of the previous claims, **characterised in that** each of said two lateral brackets (26) of the aft attachment is made from titanium.

10. Attachment pylon (4) according to any one of the previous claims, **characterised in that** said aft attachment (8) is designed so as to define two half-attachments, each capable of resisting forces applied along a vertical direction (Z) of said pylon.

11. Attachment pylon (4) according to any one of the previous claims, **characterised in that** said aft engine attachment (8) also comprises a first shear pin (66) capable of resisting forces applied along a transverse direction (Y) of said pylon, said first shear pin (66) passing through said lower spar (20) and being provided with a lower end (70) housed in said aft attachment engine (54), this lower end (70) being provided with a reaming (76) through which a first pin (74) passes, and also passing through said aft attachment body (54).

12. Attachment pylon (4) according to claim 11, **characterised in that** said aft engine attachment (8) also comprises a second shear pin (88) capable of resisting forces applied along the transverse direction (Y) of said pylon, only if a failure occurs in said first shear pin (66), said second shear pin (88) passing through said lower spar (20) and being provided with a lower end (92) housed in said aft attachment body (54), this lower end (92) being provided with a reaming (98) through which a second pin (96) passes, that also passes through said aft attachment body (54).

13. Attachment pylon (4) according to claim 12, **characterised in that** said aft engine attachment (8) also comprises a first ancillary pin (78) passing through said lower spar (20) and being provided with a lower end (82) housed in said aft attachment body (54), this lower end (82) being provided with a reaming (84) through which said first pin passes.

14. Attachment pylon (4) according to claim 13, **characterised in that** said aft engine attachment (8) also comprises a second ancillary pin (90) passing through said lower spar (20) and being provided with a lower end (94) housed in said aft attachment body (54), this lower end (94) being provided with a reaming (100) through which said second pin (96) passes.

15. Attachment pylon (4) according to claim 14, **characterised in that** said first and second pins (74, 96) are oriented along a longitudinal direction (X) of said pylon.

16. Attachment pylon (4) according to claim 15, **characterised in that** said first and second shear pins (66, 88) and said first and second ancillary pins (78, 90) each have an upper end (68, 80) passing through the same transverse rib (24) of said pylon.

17. Aircraft **characterised in that** it comprises at least one attachment pylon (4) according to any one of the previous claims.

## Patentansprüche

1. Montagestruktur (4) eines Triebwerks (2) für ein Flugzeug, wobei die Struktur des Kassettentyps durch den Zusammenbau eines oberen Längsträgers (18), eines unteren Längsträgers (20), zweier Seitenplatten (22) und von Querrippen (24), die die Längsträger und die Platten (18, 20, 22) verbinden, gebildet ist, wobei die Struktur auch eine hintere Triebwerksbefestigung (8) umfasst, die mit einem Körper der hinteren Befestigung (54) ausgestattet ist,
**dadurch gekennzeichnet, dass** die hintere Triebwerksbefestigung (8) mit zwei Seitenbeschlägen (26) ausgestattet ist, die jeweils ein Längsteil (28), das in Kontakt mit einer Innenfläche (44) der Seitenplatte (22), mit der es verbunden ist, steht und fest an dieser Innenfläche (44) angebracht ist, sowie ein Querteil (30), das eine Befestigungsschnittstelle (38) des Körpers der hinteren Befestigung (54) umfasst, wobei das Querteil (30) derart aufgebaut ist, dass es eine in der verbundenen Seitenplatte (22) ausgeführte Aussparung (48) durchdringt, umfasst.

2. Montagestruktur (4) nach Anspruch 1, **dadurch gekennzeichnet, dass** der untere Längsträger (20) eine Einschnürung (50) zeigt, die von zwei Vertiefungen (52) gebildet wird, die jeweils zur Aufnahme der zwei Seitenbeschläge (26) der hinteren Triebwerksbefestigung (8) dienen.

3. Montagestruktur (4) nach Anspruch 1 oder Anspruch 2, **dadurch gekennzeichnet, dass** die Aussparung (48) von jeder der zwei Seitenplatten (22) nach unten offen ist.

4. Montagestruktur (4) nach einem der vorhergehenden Ansprüche, **dadurch gekennzeichnet, dass** der untere Längsträger (20) zwei Seitenflügel (34) umfasst, die jeweils fest auf den zwei Seitenplatten (22) angebracht sind, und dass das Längsteil (28) von jedem der beiden Seitenbeschläge (26) der hinteren Befestigung zwischen einen der beiden Seitenflügel (34) und eine der beiden Seitenplatten (22) eingefügt ist.

5. Montagestruktur (4) nach einem der vorhergehenden Ansprüche, **dadurch gekennzeichnet, dass** das Querteil (30) von jedem der beiden Seitenbeschläge (26) der hinteren Befestigung eine Befestigungsplatte (36), die die Befestigungsschnittstelle (38) des Körpers der hinteren Befestigung (54) bestimmt, sowie Verstärkungsrippen (40), die mit der Befestigungsplatte (36) und dem Längsteil (28) verbunden sind, umfasst.

6. Montagestruktur (4) nach Anspruch 5, **dadurch gekennzeichnet, dass** die Verstärkungsrippen (40) nach parallelen Ebenen ausgerichtet sind, die durch die Querrichtung (Y) und eine Vertikalenrichtung (Z) der Struktur festgelegt sind.

7. Montagestruktur (4) nach einem der vorhergehenden Ansprüche, **dadurch gekennzeichnet, dass** die Befestigungsschnittstelle (38) von jedem der beiden Seitenbeschläge (26) der hinteren Befestigung die Form einer ebenen Fläche einnimmt, die nach einer Ebene ausgerichtet ist, die durch eine Querrichtung (Y) und eine Längsrichtung (X) der Struktur festgelegt ist.

8. Montagestruktur (4) nach einem der vorhergehenden Ansprüche, **dadurch gekennzeichnet, dass** jeder der beiden Seitenbeschläge (26) der hinteren Befestigung in einem Stück ausgeführt ist.

9. Montagestruktur (4) nach einem der vorhergehenden Ansprüche, **dadurch gekennzeichnet, dass** jeder der beiden Seitenbeschläge (26) der hinteren Befestigung in Titan ausgeführt ist.

10. Montagestruktur (4) nach einem der vorhergehenden Ansprüche, **dadurch gekennzeichnet, dass** die hintere Befestigung (8) derart gestaltet ist, dass zwei Befestigungshälften festgelegt werden, die jeweils die Aufnahme der Kräfte, die in einer Vertikalenrichtung (Z) der Struktur ausgeübt werden, sicherstellen können.

11. Montagestruktur (4) nach einem der vorhergehenden Ansprüche, **dadurch gekennzeichnet, dass** die hintere Triebwerksbefestigung (8) auch einen ersten Kreuzungszapfen (66) umfasst, der die Aufnahme der Kräfte, die in einer Querrichtung (Y) der Struktur ausgeübt werden, sicherstellen kann, wobei der erste Kreuzungszapfen (66) den unteren Längsträger (20) durchdringt und ein unteres Ende (70) aufweist, das in dem Körper der hinteren Befestigung (54) sitzt, wobei das untere Ende (70) mit einer Bohrung (76) ausgestattet ist, durch die sich ein erster Splint (74) erstreckt, der sich auch durch den Körper der hinteren Befestigung (54) erstreckt.

12. Montagestruktur (4) nach Anspruch 11, **dadurch gekennzeichnet, dass** die hintere Triebwerksbefestigung (8) ferner einen zweiten Kreuzungszapfen (88) umfasst, der nur im Falle eines Versagens, das plötzlich beim ersten Kreuzungszapfen (66) auftritt, die Aufnahme der Kräfte, die in der Querrichtung (Y) der Struktur ausgeübt werden, sicherstellen kann, wobei der zweite Kreuzungszapfen (88) den unteren Längsträger (20) durchsetzt und ein unteres Ende (92) aufweist, das in dem Körper der hinteren Befestigung (44) sitzt, wobei das untere Ende (92) mit einer Bohrung (98) ausgestattet ist, durch die sich ein zweiter Splint (96) erstreckt, der sich auch durch den Körper der hinteren Befestigung (54) erstreckt.

13. Montagestruktur (4) nach Anspruch 12, **dadurch gekennzeichnet, dass** die hintere Triebwerksbefestigung (8) ferner einen ersten Zusatzzapfen (78) umfasst, der den unteren Längsträger (20) durchsetzt und ein unteres Ende (82) aufweist, das in dem Körper der hinteren Befestigung (54) sitzt, wobei dieses untere Ende (82) mit einer Bohrung (84) ausgestattet ist, durch die sich der erste Splint erstreckt.

14. Montagestruktur (4) nach Anspruch 13, **dadurch gekennzeichnet, dass** die hintere Triebwerksbefestigung (8) ferner einen zweiten Zusatzzapfen (90) umfasst, der den unteren Längsträger (20) durchsetzt und ein unteres Ende (94) aufweist, das in dem Körper der hinteren Befestigung (54) sitzt, wobei dieses untere Ende (94) mit einer Bohrung (100) ausgestattet ist, durch die sich der zweite Splint (96) erstreckt.

15. Montagestruktur (4) nach Anspruch 14, **dadurch gekennzeichnet, dass** der erste und der zweite Splint (74, 96) entsprechend der Längsrichtung (X) der Struktur ausgerichtet sind.

16. Montagestruktur (4) nach Anspruch 15, **dadurch gekennzeichnet, dass** der erste und der zweite Kreuzungszapfen (66, 88) sowie der erste und der zweite Zusatzzapfen (78, 90) jeweils ein oberes Ende (68, 80) aufweisen, die die gleiche Querrippe (24) der Strukturen durchdringen.

17. Flugzug, **dadurch gekennzeichnet, dass** es mindestens eine Montagestruktur (4) nach einem der vorhergehenden Ansprüche umfasst.
